**Europäisches Patentamt**

**European Patent Office**

**Office européen des brevets**

(19)

(11) Veröffentlichungsnummer: **0 149 108 B2**

(12) # NEUE EUROPÄISCHE PATENTSCHRIFT

(45) Veröffentlichungstag der neuen Patentschrift:
26.06.91 Patentblatt 91/26

(51) Int. Cl.⁵ : **F16C 13/00**

(21) Anmeldenummer: **84114823.2**

(22) Anmeldetag: **06.12.84**

(54) Walzvorrichtung.

(30) Priorität: 22.12.83 CH 6844/83

(43) Veröffentlichungstag der Anmeldung:
24.07.85 Patentblatt 85/30

(45) Bekanntmachung des Hinweises auf die
Patenterteilung:
16.03.88 Patentblatt 88/11

(45) Bekanntmachung des Hinweises auf die
Entscheidung über den Einspruch:
26.06.91 Patentblatt 91/26

(84) Benannte Vertragsstaaten:
AT DE FR GB IT NL SE

(56) Entgegenhaltungen:
DE-A- 2 325 721
DE-A- 2 418 431
DE-A- 2 646 896
DE-A- 2 832 457
DE-A- 2 849 202
DE-A- 2 902 956
DE-A- 3 049 080
DE-B- 1 108 649

(56) Entgegenhaltungen:
FR-A- 2 143 779
FR-A- 2 205 134
FR-A- 2 291 402
GB-A- 1 035 527
GB-A- 2 081 628
US-A- 2 676 387
US-A- 3 097 590
US-A- 3 097 591
US-A- 3 119 324
"Das Papier" 1973, S. 269-277

(73) Patentinhaber: Sulzer-Escher Wyss AG
Hardstrasse 319
CH-8023 Zürich (CH)

(72) Erfinder: Link, Christoph
Winzerweg 6
W-7987 Weingarten (DE)
Erfinder: Brandiser, Herbert
Weingartenerstrasse 17
W-7984 Mochenwangen (DE)

(74) Vertreter: Paschedag, Hansjoachim
c/o Sulzer - Escher Wyss AG Patentabteilung
Postfach
CH-8023 Zürich (CH)

EP 0 149 108 B2

**Beschreibung**

Die Erfindung betrifft eine Walzvorrichtung mit einer Durchbiegungseinstellwalze, die einen durchgehenden, nicht-rotierenden Träger und einen um den Träger rotierbaren und wesentlichen entlang seiner ganzen Länge mittels Stützelementen gegen den Träger abgestützten Walzenmantel aufweist, sowie einer Gegenwalze, wobei der Abstand der Lagerungen des Walzenmantels der Durchbiegungseinstellwalze auf dem Träger mindestens gleich dem Abstand der Lagerungen der Gegenwalze voneinander ist.

Solche Walzvorrichtungen sind beispielsweise aus der US-A-3 119 324 oder der CH-A-623 369 bekannt und dienen beispielsweise zur Entwässerung, Glättung oder anderweitiger Behandlung von bahnförmigen Materialien wie Kunststoff, Papier, Pappen oder Textilien oder zum Walzen von Metall-Folien oder Bändern. Durchbiegungseinstellwalzen, durch die sich die Presskraft zweier Walzen gegeneinander über die Breite der Walzen einstellen oder ausgleichen lässt, haben sich hierbei als besonders geeignet erwiesen, um über die Breite der behandelten Materialbahn eine besonders gleichmässige, den Anforderungen anpassbare, oder fehlerhafte Walzenprofile ausgleichende Behandlung zu erreichen. Voraussetzung für die Erreichung dieses Zieles ist es, dass der Walzspalt zwischen der Durchbiegungseinstellwalze und der Gegenwalze über die gesamte Breite möglichst genau dem gewünschten Profil entspricht, im Spezialfall beispielsweise konstant gehalten werden kann. Da jedoch Presswalzen meist eine unterschiedliche Konstruktion aufweisen, haben die Biegelinien beider Walzen nicht die gleiche Form, und daher ergibt sich ein ungleichmässiger Walzspalt. Dies kann zwar durch zonenweise unterschiedliche Presskräfte in der Durchbiegungseinstellwalze grossenteils kompensiert werden, engt aber trotzdem die nutzbare Wirksamkeit der Zonensteuerung deutlich ein.

In der CH-A-623 369 ist bereits beschrieben worden, dass sich diese Abweichungen stark reduzieren und die Biegelinien der Durchbiegungseinstellwalze und der Gegenwalze besser aneinander angleichen lassen, wenn die Lagerungen des Walzenmantels der Durchbiegungseinstellwalze auf dem Träger und die Lagerungen der Zapfen der Gegenwalze im Rahmen der Walzvorrichtung einander gegenüberliegend angeordnet und äquidistant sind. Die Zapfen der als Massiv- oder als Rohrwalze ausgebildeten Gegenwalze sind dabei fest mit dem Walzenkörper verbunden und rotieren zusammen mit diesem. Die praktische Anwendung dieser Idee ist jedoch sehr begrenzt, da die Platzverhältnisse, insbesondere für die Anordnung der diversen Lager, eine Sonderstuhlung erfordern und ausserdem die Verbesserung durch Umbau bestehender Walzwerke behindern oder ausschliessen.

Dieses Problem liesse sich zwar durch Verwendung zweier gleichartiger, gegeneinander wirkender Durchbiegungseinstellwalzen lösen, jedoch würde dies praktisch eine Verdoppelung des Aufwandes und der Kosten, abgesehen von der Notwendigkeit einer komplizierten Steuerung, erfordern.

Die Erfindung setzt sich die Aufgabe, die genannten Nachteile des Standes der Technik zu beseitigen und insbesondere eine Walzvorrichtung mit nur einer Durchbiegungseinstellwalze derart weiterzubilden, dass auf einfache Art und auch bei bestehenden Walzvorrichtungen eine verbesserte Angleichung der Biegelinien der beiden Walzen und eine Verminderung der Walzspalt-Abweichungen erreicht wird, bzw. sich ein gewünschtes Walzspalt-Profil über die Walzbreite präziser einstellen und einhalten lässt.

Erfindungsgemäss wird diese Aufgabe durch die im Kennzeichnenden Teil des Anspruchs 1 enthaltenen Merkmale gelöst.

Aus der US-A-3 097 590 und US-A-3 097 591 sind zwar schon Paare von Walzen bekannt, die ein zapfenloses, mit nur zwei Gelenklagern gegen ein Joch oder gegen Supporte einer Stuhlung abgestütztes Walzenrohr aufweisen. Aus diesen Publikationen sind jedoch keinerlei Hinweise daraus zu entnehmen, dass eine solche Walze im Zusammenwirken mit einer Durchbiegungseinstellwalze mit ganz anderen Biegeeigenschaften eine Angleichung der Biegelinien beider Walzen aneinander und dadurch eine bessere Anpassung des Walzspaltes an ein gewünschtes Profil, z.B. eine bessere Gleichmässigkeit des Walzspaltes über die Walzenbreite, erreichen lässt.

Vorteilhaft ist es bei der erfindungsgemässen Walzvorrichtung, wenn der Abstand der Lager der Gegenwalze im gleichen Grössenordnungsbereich liegt oder kleiner ist als der wirksame Lagerabstand des Walzenmantels der Durchbiegungseinstellwalze.

Bei einer vorteilhaften Ausführungsform kann die Gegenwalze einen durchgehenden Träger aufweisen, der entweder mit dem Walzenrohr rotierbar ist, wobei das Walzenrohr auf dem Träger mit Kugelgelenklagern gelagert ist, oder der Träger ist feststehend und das Walzenrohr ist mit Wälzlagern, z.B. Pendellagern, auf dem Träger gelagert.

Der Walzenmantel der Durchbiegungseinstellwalze kann in an sich bekannter Weise ebenfalls mit Wälzlagern, z.B. Pendellagern auf dem zugehörigen Träger gelagert sein, oder der Walzenmantel kann radial frei beweglich sein, z.B. mittels einer Kulissenführung an beiden Enden, wobei die beiden äusseren Stützelemente zwischen Walzenmantel und Träger als wirksame Lagerungen anzusehen sind.

Die Abstützung des Walzenmantels der Durchbiegungseinstellwalze auf dem Träger kann dabei in beliebiger bekannter Weise ausgebildet sein, z.B. als hydrostatische oder hydrodynamische Stützelemente, als hydraulische oder pneumatische Druckkammern, oder auch als mechanisch, magnetisch, elektrisch, hydraulisch oder pneumatisch angedrückte Rollen oder Lagerschuhe, wobei die Steuerung der Stützelemente in einer geeigneten, dem Fachmann bekannten oder naheliegenden Weise erfolgt. Die Erfindung, sowie zweckmässige und vorteilhafte Weiterbildungen derselben, wird an Hand der in den Figuren dargestellten Ausführungsbeispiele von Walzvorrichtungen näher erläutert.

Diese zeigen drei Ausführungsbeispiele in schematischer Darstellung im Schnitt, und zwar :

Figur 1 eine Walzvorrichtung mit nichtrotierendem Träger der Gegenwalze,

Figur 2 eine Walzvorrichtung mit rotierbarem Träger der Gegenwalze,

Figur 3 eine Walzvorrichtung mit Lagerung der Gegenwalze auf zwei Supporten der Walzenstuhlung.

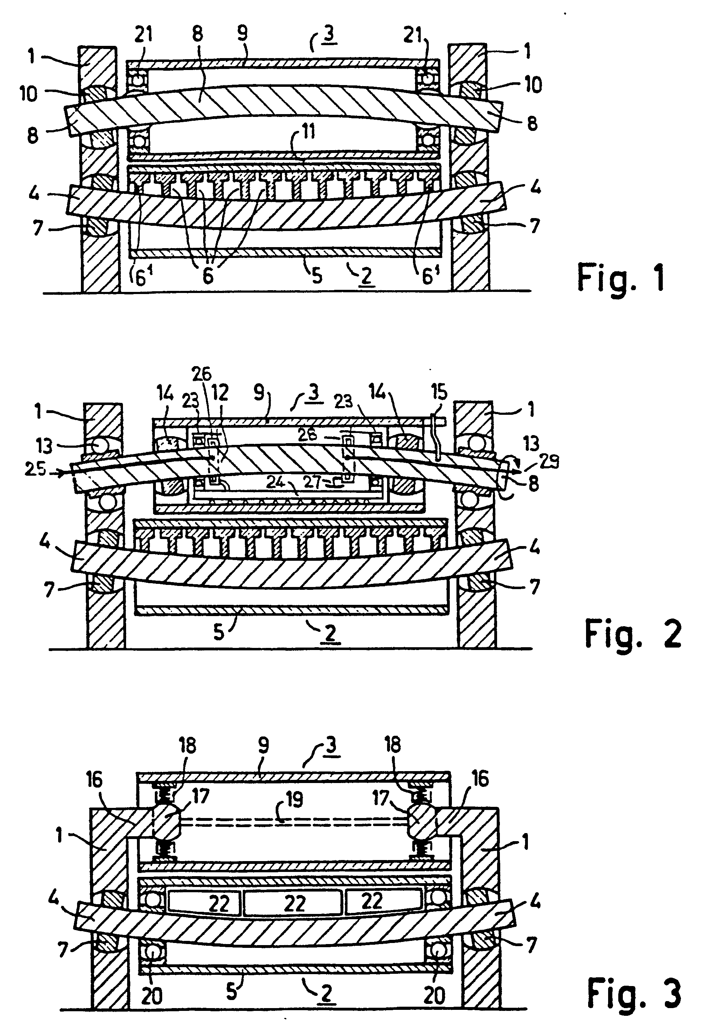

Bei der in Figur 1 wiedergegebenen Walzvorrichtung sind in einer Walzenstuhlung 1 zwei Walzen 2 und 3 gelagert. Die untere Walze 2 ist als Durchbiegungseinstellwalze, z.B. gemäss US-A-3 885 283 oder US-A-3 802 044 ausgebildet und weist einen feststehenden Träger 4 und einen um diesen rotierbaren Walzenmantel 5 auf, welcher auf dem Träger mittels einer Reihe von hydrostatischen Stützelementen 6 in Pressrichtung abgestützt ist. Der Träger 4 ist in der Walzenstuhlung 1 mittels je eines Kugelgelenkes 7 oder eines anderen Gelenklagers an beiden Enden gelagert, so dass eine Durchbiegung des Trägers möglich ist. Fall eine zu starke Durchbiegung unter dem Einfluss de Presskräfte jedoch unerwünscht sein sollte, so kann auch eine biegefeste Einspannung, z.B. nach US-A-4 414 889 vorgesehen sein. Der Walzenmantel 5 ist um den Träger 4 rotierbar und in Radialrichtung frei beweglich, und die Presskraft wird in diesem Beispiel nur durch die in Längsrichtung der Walze verlaufende Reihe von Stützelementen 6 erzeugt, wie aus US 3 885 283 bekannt, wobei eine Querbewegung durch eine Kulissenführung verhindert werden kann. Stattdessen kann der Walzenmantel 5 jedoch auch gemäss US 3 802 044 auf dem Träger 1 mittels eines Pendellagers gelagert sein, wobei zur Erzeugung der Anpresskraft eine Anstellvorrichtung für die Walzen vorgesehen sein kann. Der Antrieb der Durchbiegungseinstellwalze kann z.B. gemäss der vorbekannten US 3 949 455 ausgeführt sein oder in anderer geeigneter Weise.

Die Gegenwalze 3 weist ebenfalls einen feststehenden Träger 8 und ein um diesen rotierbares Walzenrohr 9 auf. Die Lagerung des Trägers 8 in der Walzenstuhlung 1 erfolgt auch hier mittels eines Kugelgelenkes 10 oder einer biegefesten Einspannung. Das rotierbare Walzenrohr 9 ist auf dem zugehörigen Träger 8 gelenkig gelagert, z.B. mittels eines Wälzlagers, vorzugsweise eines Pendellagers 21.

Bei der beschriebenen Walzvorrichtung ergibt sich eine überraschend gute Übereinstimmung der Biegelinien der beiden unterschiedlich ausgebildeten Walzen 2 und 3, und damit auch eine entsprechend sehr gute Gleichmässigkeit des Walzspaltes 11, oder bei geeigneter Ansteuerung der einzelnen Stützelemente 6 eine exakte Einhaltung eines gewünschten Walzprofils. Dieser Vorteil wird aber hierbei auf besonderes einfache Art erreicht, ohne die Notwendigkeit, erhebliche Änderungen an bestehenden Walzstuhlungen vornehmen zu müssen. Ein Umbau solcher Walzstuhlungen zur Erreichung einer verbesserten Spalt-Gleichmässigkeit ist also ohne grosse Schwierigkeiten und ohne besonderen Aufwand möglich.

Die in Figur 2 wiedergegebene Walzvorrichtung unterscheidet sich vom vorstehend beschriebenen Ausführungsbeispiel dadurch, dass die Gegenwalze 3 einen mit dem Walzenrohr 9 mitrotierenden Träger 12 aufweist, der in der Walzenstuhlung 1 mit Wälzlagern 13, vorzugsweise Pendellagern gelagert ist. Das Walzenrohr 9 ist andererseits auf dem Träger 12 in einem Kugelgelenk 14 gelenkig gelagert. Um eine synchrone Rotation von Walzenrohr 9 und Träger 12 zu gewährleisten, ist zwischen beiden Teilen ein Mitnehmer 15 vorgesehen. Eine Walzvorrichtung dieser Art kann statt von der Durchbiegungseinstellwalze 2 vom Träger 12 mittels einer nicht dargestellten Vorrichtung angetrieben werden.

Bei der Ausführungsform von Figur 3 ist die Gegenwalze 3 im Gegensatz zu den beiden vorangegangenen Beispielen nicht mit einem eigentlichen Träger versehen, sondern ist gelenkig auf von der Walzenstuhlung ausgehenden Supporten 16 an beiden Enden gelagert. Die Gelenkigkeit wird dadurch erreicht, dass an den Enden der Supporte 16 jeweils eine Kugelschale 17 vorgesehen ist, auf der Lagerschuhe 18 abgestützt sind. Das Walzenrohr 9 ist auf diesen Lagerschuhen beweglich oder federnd abgestützt, so dass das Walzenrohr 9 in radialer Richtung frei beweglich ist. Die Kopfteile 17 der beiden Supporte 16 können zusätzlich zur Stabilisierung durch eine Stange 19 verbunden sein, die die beim Betrieb der Walzvorrichtung auftretende Zugkraft aufnimmt. Da in diesem Beispiel das Walzenrohr 9 radial beweglich ist, kann der Walzenmantel 5 der Durchbiegungseinstellwalze 2 auf dem zugehörigen Träger 4 mittels Wälzlagern 20, die vorzugsweise als Pendellager ausgebildet sind, gelagert werden.

Bei allen beschriebenen Beispielen ergab sich eine deutlich verbesserte Übereinstimmung der Biegelinien der Durchbiegungseinstellwalze 2 und der Gegenwalze 3, wenn die Gegenwalze als gelenkig gelagertes Walzenrohr 9 ausgebildet ist, und zusätzlich der Lagerabstand der Gegenwalze 3 etwa gleich dem Lagerabstand des Mantels der Durchbiegungseinstellwalze 3 ist oder zumindest im gleichen Grössenordnungsbereich liegt. Bei bestimmter Wahl der Lager beider Walzen ergab sich auch eine Verbesserung, wenn der Lagerabstand der Gegenwalze 3 kleiner war.

Der Lagerabstand der Gegenwalze ist hierbei der Abstand der Gelenklager 14, 18 bzw. 21 des Mantelrohres, während als Lagerabstand des Mantels der Durchbiegungseinstellwalze bei Ausbildung als Wälzlager der Mittenabstand der Lager 20 zu berücksichtigen ist, bei Abstützung nur durch Stützelemente dagegen als wirksamer Abstand etwa der Abstand der äussersten, eine Presskraft ausübenden Stützelemente 6 zu werten ist, unter Ausserachtlassung von nicht druckbeaufschlagten Stützelementen.

Es wird bemerkt, dass die Erfindung nicht auf die beschriebenen Ausführungsbeispiele beschränkt ist, sondern Abwandlungen möglich sind, ohne den Rahmen des Erfindungsgedankens zu verlassen. So kann bei der Durchbiegungseinstellwalze auch eine andere Abstützung als durch hydrostatische Stützelemente zweckmässig sein. Stattdessen können auch Stützelemente anderer Art, z.B. hydrodynamische, Wälzgelagerte oder elektromagnetische verwendet werden, oder eine oder mehrere Druckkammern 22, seine Figur 3, zwischen Walzenmantel und Träger, d.h. sogenannte schwimmende Walzen. Es können auch zusätzliche Stützelemente oder Druckkammern vorgesehen sein, die der Pressrichtung entgegenwirken. Auch können mehrere verschiedenartige Stützelemente gleichzeitig, in der gleichen Walze kombiniert Verwendung finden.

Die Lagerung des Walzenrohres der Gegenwalze kann ebenfalls abweichend gestaltet sein, solange diese Lagerung nur hinreichend gelenkig ausgebildet ist und der Lagerabstand den genannten Bedingungen entspricht.

Die Erfindung ist euch nicht auf die räumliche Orientierung der Walzen oder auf eine Walzvorrichtung mit nur zwei Walzen eingeschränkt. Die Durchbiegungseinstellwalze kann auch die obere Position einnehmen oder die Orientierung kann schräg oder horizontal sein.

Auch kann die Walzvorrichtung mehr als zwei Walzen aufweisen, solange nur eine Walze als Durchbiegungseinstellwalze ausgebildet und die Gegenwalze erfindungsgemäss gestaltet und angeordnet ist. Vorteilhaft ist es bei mehr als zwei Walzen, wenn nicht nur die eine Gegenwalze, sondern sämtliche übrigen Walzen erfindungsgemäss als zapfenloses Walzenrohr mit einer nur aus zwei gelenkig ausgebildeten Lagern bestehenden Abstützung ausgeführt sind.

Die Gegenwalze kann im übrigen auch für bestimmte Verwendungen in geeigneter Weise heizbar ausgebildet sein. In Figur 2 ist in der Gegenwalze 3 dazu ein am Joch 8 mittels Pendelwälzlagern 23 aufgehängtes, nichtrotierendes Sprührohr 24 vorgesehen. Diesem wird heisses Öl über eine Zuleitung 25 und eine von einem Nitnehmer mit dem Wälzlager 23 verbundene Verbindung 26 (rotary joint) zugeführt. Die Ölabfuhr aus dem Walzeninneren erfolgt über eine geeignete Abschöpfeinrichtung 27 ebenfalls mittels einer Rotationsverbindung 28 über eine Abflussleitung 29.

## Ansprüche

1. Walzvorrichtung mit einer Durchbiegungseinstellwalze (2), die einen durchgehenden, nicht-rotierenden Träger (4) und einen um den Träger rotierbaren und im wesentlichen entlang seiner ganzen Länge mittels Stützelementen (6, 22) gegen den Träger abgestützten Walzenmantel (5) aufweist, sowie einer Gegenwalze (3), wobei der Abstand der Lagerungen ($6^1$, 20) des Walzenmantels der Durchbiegungseinstellwalze auf dem Träger mindestens gleich dem Abstand der Lagerungen (14, 18, 21) der Gegenwalze voneinander ist, dadurch gekennzeichnet, dass die Gegenwalze (3) ein zapfenloses Walzenrohr (9) ist, dessen Abstützung nur aus zwei gelenkig ausgebildeten Lagen (14, 18, 21) besteht, und dass der Abstand der gelenkig ausgebildeten Lager (14, 18, 21) im gleichen Grössenordnungsbereich liegt wie der wirksame Lagerabstand der Durchbiegungseinstellwalze (2).

2. Walzvorrichtung nach Anspruch 1, dadurch gekennzeichnet, dass die Gegenwalze (3) einen in der Walzenstuhlung (1) gelagerten Träger (8) aufweist.

3. Walzvorrichtung nach Anspruch 2, dadurch gekennzeichnet, dass der Träger (8) der Gegenwalze (3) nicht-rotierend ist.

4. Walzvorrichtung nach Anspruch 3, dadurch gekennzeichnet, dass der Träger (8) in der Walzenstuhlung (1) mit Gelenklagen (10) gelagert ist.

5. Walzvorrichtung nach Anspruch 3 oder 4, dadurch gekennzeichnet, dass das Walzenrohr (9) auf dem nicht-rotierenden Träger mittels Pendellagern (21) gelagert ist.

6. Walzvorrichtung nach einem der Ansprüche 1-5, dadurch gekennzeichnet, dass das Walzenrohr (9) der Gegenwalze (3) antreibbar ist.

7. Walzvorrichtung nach Anspruch 2, dadurch gekennzeichnet, dass der Träger (12) der Gegenwalze (3) mit dem Walzenrohr 9 rotierbar und in der Walzenstuhlung (1) mittels Wälzlagen (13), vorzugsweise Pendellagen, gelagert ist.

8. Walzvorrichtung nach Anspruch 7, dadurch gekennzeichnet, dass das Walzenrohr (9) auf dem Träger (12) mittels Gelenklagen (14) gelagert ist.

9. Walzvorrichtung nach Anspruch 7 oder 8, dadurch gekennzeichnet, dass der Träger (12) der Gegenwalze (3) antreibbar ist.

10. Walzvorrichtung nach einem der Ansprüche 7-9, dadurch gekennzeichnet, dass zwischen dem Walzenrohr (9) und dem Träger (12) der Gegenwalze (3) ein Mitnehmer (15) vorgesehen ist.

11. Walzvorrichtung nach einem der Ansprüche 1-9, dadurch gekennzeichnet, dass die beidseitigen Lagerstellen der Träger (4, 8, 12) aller Walzen in der Stuhlung (1) in je einer gemeinsamen Ebene liegen.

12. Walzvorrichtung nach Anspruch 1, dadurch gekennzeichnet, dass das Walzenrohr (9) der Gegenwalze (3) auf von der Walzenstuhlung (1) ausgehenden Supporten (16) mittels Pendellagen (17, 18) gelagert ist.

13. Walzvorrichtung nach Anspruch 12, dadurch gekennzeichnet, dass die von den beiden Seiten der Walzenstuhlung (1) ausgehenden Supporte (16) durch eine Stabilisierungsstange (19) miteinander verbunden sind.

14. Walzvorrichtung nach einem der Ansprüche 1-13, dadurch gekennzeichnet, dass das Walzenrohr (9) der Gegenwalze (3) über seine ganze Länge radial zumindest in Pressrichtung beweglich ist.

15. Walzvorrichtung nach einem der Ansprüche 1-14, dadurch gekennzeichnet, dass die Durchbiegungseinstellwalze (2) einen über seine ganze Länge in Pressrichtung beweglichen, gegenüber dem Träger (4) abgestützten Walzenmantel (5) aufweist, wobei der Abstand der äusseren Abstützungen (6¹) den wirksamen Lagerabstand bildet.

16. Walzvorrichtung nach einem der Ansprüche 1-14, dadurch gekennzeichnet, dass die Gegenwalze (3) heizbar ist.

17. Walzvorrichtung nach einem der Ansprüche 1-16, dadurch gekennzeichnet, dass mehr als zwei Walzen vorgesehen sind, wobei eine der Walzen als Durchbiegungseinstellwalze und sämtliche übrigen als zapfenlose Walzenrohre mit einer aus nur zwei gelenkig ausgebildeten Lagern bestehenden Abstützungen ausgeführt sind.


## Claims

1. Roller assembly with a deflection adjustment roller (2), which has a continuous, non-rotatable carrier (4) and a roller shell (5) which is rotatable about the carrier and is supported against the carrier substantially along its entire length by means of support elements (6, 22), and with a counter roller (3), the spacing of the bearings (6¹, 20) of the roller shell of the deflection adjustment roller on the carrier being at least equal to the spacing of the bearings (14, 18, 21) of the counter roller from each other, characterized in that the counter roller (3) is a journal-free roller tube (9), the support of which consists only of two articulatedly constructed bearings (14, 18, 21), and that the spacing of the articulatedly constructed bearings (14, 18, 21) lies in the same range of magnitude or is smaller than the effective bearing spacing of the deflection adjustment roller (2).

2. Roller assembly according to Claim 1, characterized in that the counter roller (3) has a carrier (8) which is mounted in the roller frame (1).

3. Roller assembly according to Claim 2, characterized in that the carrier (8) of the counter roller (3) is non-rotatable.

4. Roller assembly according to Claim 3, characterized in that the carrier (8) is mounted in the roller frame (1) with pivot bearings (10).

5. Roller assembly according to Claim 3 or 4, characterized in that the roller tube (9) of the counter roller (3) is mounted on the non-rotary carrier by means of self-aligning bearings (21).

6. Roller assembly according to one of Claims 1 to 5, characterized in that the roller tube (9) of the counter roller (3) is drivable.

7. Roller assembly according to Claim 2, characterized in that the carrier (12) of the counter roller (3) is rotatable with the roller tube (9) and is mounted in the roller frame (1) by means of roller bearings (13), preferably self-aligning bearings.

8. Roller assembly according to Claim 7, characterized in that the roller tube (9) is mounted on the carrier (12) by means of pivot bearings (14).

9. Roller assembly according to Claim 7 or 8, characterized in that the carrier (12) of the counter roller (3) is drivable.

10. Roller assembly according to one of Claims 7 to 9, characterized in that a driver (15) is provided between the roller tube (9) and the carrier (12) of the counter roller (3).

11. Roller assembly according to one of Claims 1 to 9, characterized in that the bearing points, on both sides, of the carriers (4, 8, 12) of all the rollers lie in the frame (1) each in a common plane.

12. Roller assembly according to Claim 1, characterized in that the roller tube (9) of the counter roller (3) is mounted on rests (16) extending from the roller frame (1), by means of self-aligning bearings (17, 18).

13. Roller assembly according to Claim 12, characterized in that the rests (16) extending from the two sides of the roller frame (1) are connected with each other by a stabilizing rod (19).

14. Roller assembly according to one of Claims 1 to 13, characterized in that the roller tube (9) of the counter roller (3) is movable radially over its entire length at least in the pressing direction.

15. Roller assembly according to one of Claims 1 to 14, characterized in that the deflection adjustment roller (2) has a roller shell (5) which is movable over its entire length in the pressing direction and is supported with respect to the carrier (4), the spacing of the outer supports (6¹) forming the effective bearing spacing.

16. Roller assembly according to one of Claims 1 to 14, characterized in that the counter roller (3) is heatable.

17. Roller assembly according to one of Claims 1 to 16, characterized in that more than two rollers are provided, one of the rollers being constructed as a deflection adjustment roller and all the remaining rollers being constructed as journal-free roller tubes with a support consisting only of two articulatedly constructed bearings.

## Revendications

1. Installation de calandrage comportant un rouleau (2) à réglage de flexion transversale, qui présente un support (4) non tournant qui le traverse, et un manchon de rouleau (5) qui tourne sur le support et s'appuie sur le support au moyen d'éléments d'appui (6, 22), sensiblement sur toute sa longueur, ainsi qu'un contre-rouleau (3), la distance sur le support des emplacements de palier ($6^1$, 20) du manchon de rouleau du rouleau à réglage de flexion transversale est au moins égale à la distance entre les emplacements de palier (14, 18, 21) du contre-rouleau, caractérisée par le fait que le contre-rouleau est un tube (9) sans tourillons dont l'appui n'est constitué que par deux paliers articulés (14, 18, 21) et que la distance entre les paliers articulés (14, 18, 21) se situe dans la même zone d'ordre de grandeur, ou est plus faible, que la distance effective du rouleau (2) à réglage de flexion transversale.

2. Installation de calandrage selon la revendication 1, caractérisée par le fait que le contre-rouleau (3) présente un support (8) monté sur le bâti de calandrage (1).

3. Installation de calandrage selon la revendication 2, caractérisée par le fait que le support (8) du contre-rouleau (3) n'est pas rotatif.

4. Installation de calandrage selon la revendication 3, caractérisée par le fait que le support (8) est monté sur le bâti (1) avec des paliers articulés (10).

5. Installation de calandrage selon la revendication 3 ou 4, caractérisée par le fait que le tube (9) du contre-rouleau est monté sur le support non tournant au moyen de paliers articulés (21).

6. Installation de calandrage selon une des revendications 1 à 5, caractérisée par le fait que le tube (9) du contre-rouleau (3), peut être entraîné.

7. Installation de calandrage selon la revendication 2, caractérisée par le fait que le support (12) du contre-rouleau (3), peut tourner avec le tube (9) et qu'il est monté sur le bâti de calandrage (1) au moyen de roulements (13), de préférence des roulements articulés.

8. Installation de calandrage selon la revendication 7, caractérisée par le fait que le tube de calandrage (9) est monté sur le support (12) au moyen de paliers articulés (14).

9. Installation de calandrage selon la revendication 7 ou 8, caractérisée par le fait que le support (12) du contre-rouleau (3) peut être entraîné.

10. Installation de calandrage selon une des revendications 7 à 9, caractérisée par le fait qu'un entraîneur (15) est prévu entre le tube (9) et le support (12) du contre-rouleau (3).

11. Installation de calandrage selon une des revendications 1 à 9, caractérisée par le fait que les emplacements de palier situés des deux côtés des supports (4, 8, 12) de tous les rouleaux sur le bâti (1) sont situés chacun dans un plan commun.

12. Installation de calandrage selon la revendication 1, caractérisée par le fait que le tube (9) du contre-rouleau (3) est monté au moyen de paliers articulés (17, 18) sur des supports (16) partant du bâti de calandrage (1).

13. Installation de calandrage selon la revendication 12, caractérisée par le fait que les supports (16) qui partent des deux côtés du bâti de calandrage (1) sont reliés entre eux par une barre de stabilisation (19).

14. Installation de calandrage selon une des revendications 1 à 13, caractérisée par le fait que le tube (9) du contre-rouleau (3), peut se déplacer radialement sur toute sa longueur au moins dans la direction de pressage.

15. Installation de calandrage selon une des revendications 1 à 14, caractérisée par le fait que le rouleau (2) à réglage de flexion transversale présente un manchon de rouleau (5) qui peut se déplacer sur toute sa longueur dans la direction de pressage, et s'appuie sur le support (4), la distance des appuis ($6^1$) extrêmes formant la distance entre paliers effectifs.

16. Installation de calandrage selon une des revendications 1 à 14, caractérisée par le fait que le contre-rouleau (3) est chauffable.

17. Installation de calandrage selon une des revendications 1 à 16, caractérisée par le fait que sont prévus plus de deux rouleaux, un des rouleaux étant exécuté avec réglage de flexion transversale et tous les autres rouleaux étant exécutés sous forme de tubes sans tourillons avec un appui constitué seulement par deux paliers articulés.

Fig. 1

Fig. 2

Fig. 3